# EUROPEAN PATENT SPECIFICATION

(11) **EP 3 712 541 B1**
(45) Date of publication and mention of the grant of the patent: **09.11.2022**
(21) Application number: 18928989.5
(22) Date of filing: 24.12.2018
(51) Int. Cl.: F25B 30/06, F25B 13/00, F25B 47/02, F25B 49/02, F04D 29/058, F25B 29/00, F25B 31/00, F25B 41/00, F25B 41/20, F04D 17/10

(54) **HEAT PUMP SYSTEM**
WÄRMEPUMPENSYSTEM
SYSTÈME DE POMPE À CHALEUR

(30) Priority: 20.11.2018 CN 201811382510
(43) Date of publication of application: 23.09.2020
(73) Proprietor: Qingdao Haier Air-Conditioning Electronic Co., Ltd, Qingdao, Shandong 266101 (CN)
(72) Inventor: ZHANG, Hongliang, Shandong 266101 (CN); ZHANG, Jie, Shandong 266101 (CN); ZHAO, Lei, Shandong 266101 (CN); XIE, Jipei, Shandong 266101 (CN); LIU, Qiankun, Shandong 266101 (CN); XU, Zhiqiang, Shandong 266101 (CN)
(74) Representative: dompatent von Kreisler Selting Werner - Partnerschaft von Patent- und Rechtsanwälten mbB
(86) International application number: PCT/CN2018/123015
(87) International publication number: WO 2020/103271

(56) References cited:
- EP-A1- 1 371 912
- WO-A1-2017/171076
- CN-A- 106 403 377
- CN-A- 107 166 809
- CN-A- 107 621 097
- CN-A- 108 534 208
- CN-U- 206 037 476
- JP-A- H11 294 879
- KR-A- 20120 087 384

## Description

### TECHNICAL FIELD

The present disclosure relates to the field of air conditioning device technologies, and more particularly, to a heat pump system.

### BACKGROUND

Conventional air-cooled magnetic levitation centrifugal water chiller units using a magnetic levitation centrifugal compressor cannot withstand drastic changes in pressure, do not have reliable cooling and heating switching solutions, and cannot solve the problem of defrosting in the heating process.

In the prior art, an air-cooled screw heat pump system uses a four-way reversing valve to switch between cooling and heating conditions. However, when a defrosting operation of the units is performed, the air-cooled screw heat pump system need to operate according to a refrigeration cycle and turn off a fan; during the switching of the cooling and heating conditions and a reverse cycle the defrosting process, the pressure on suction and exhaust sides of the units changes drastically, and thus the air-cooled screw heat pump system cannot be applied to magnetic levitation centrifugal units.

JP H11 294879 A relates to a refrigeration apparatus, equipped with a turbo-compressor, wherein the refrigeration apparatus can be used for heating and cooling. The turbo-compressor of JP H11 294879 A uses magnetic levitation and comprises a valve-controlled bypass line. This document, which represents the closest prior art to the present invention, does not show that the bypass valve is used to reduce a shut-down pressure ratio of the compressor.

KR 2012 0087384 A discloses a refrigerating cycle apparatus equipped with a flash tank to use the flash tank for cooling and heating commonly.

### SUMMARY

Embodiments of the present invention provide a heat pump system, which enables the magnetic levitation centrifugal units to perform the defrosting operation quickly and stably while having cooling and heating functions. The invention is solely defined by appended claims.

According to the invention, there is provided a heat pump system as defined by appended independent claim 1.

### BRIEF DESCRIPTION OF THE DRAWINGS

The accompanying drawings, which are incorporated in and constitute a part of this description, illustrate embodiments consistent with the present disclosure and, together with the description, serve to explain the principles of the present disclosure.
Fig. 1 is a schematic structural diagram of a heat pump system according to an embodiment.
Fig. 2 is a schematic structural diagram of a heat pump system according to another embodiment.
Fig. 3 is a schematic structural diagram of a heat pump system according to another embodiment.
Fig. 4 is a schematic structural diagram of a heat pump system according to another embodiment.
Fig. 5 is a schematic structural diagram of a heat pump system according to another embodiment.

### DETAILED DESCRIPTION

The following description and accompanying drawings fully illustrate the specific implementation solutions of the present invention so that a person skilled in the art can practice them. The embodiments merely represent possible changes, where any embodiment of the present invention comprises at least all features of appended independent claim 1.

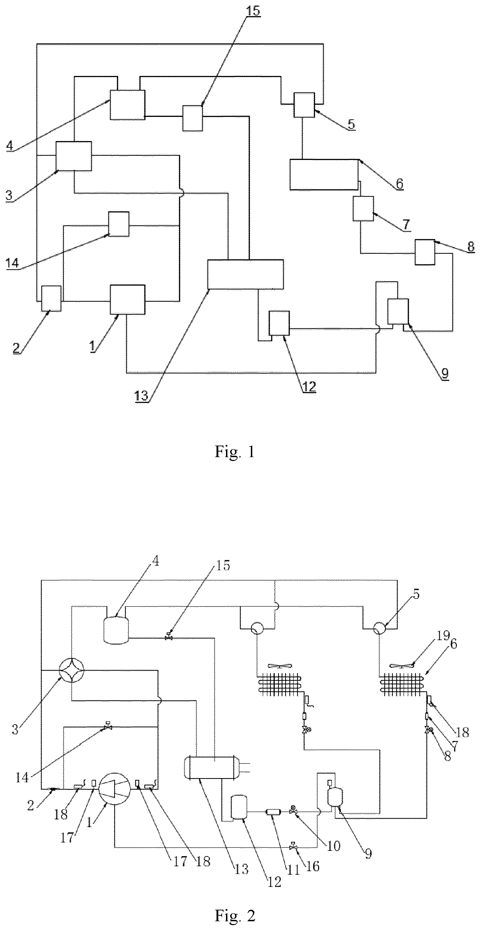

Fig. 1 shows an embodiment of a heat pump system.

According to the invention, the heat pump system includes a magnetic levitation centrifugal compressor 1, and further includes a switching communication device 3 and a first electric valve 14.

An exhaust pipe of the magnetic levitation centrifugal compressor 1 is connected to a first interface of the switching communication device 3 through a first check valve 2, and an air suction pipe of the magnetic levitation centrifugal compressor 1 is connected to a third interface of the switching communication device 3.

The first electric valve 14 is arranged in parallel with the magnetic levitation centrifugal compressor 1 for reducing a differential pressure between a high side and a low side when the magnetic levitation centrifugal compressor 1 is on and off.

Optionally, a second interface of the switching communication device 3 is connected to a gas-liquid separator 4, and the gas-liquid separator 4 is connected to an evaporator 13; although evaporator 13 is designated as "evaporator" throughout this description, this heat exchanger may also be operated as condenser depending from the operating mode of the heat pump system and the corresponding setting of the communication switching device 3; the gas-liquid separator 4 is further sequentially connected to a heat exchange component and a flash tank 9, and the heat exchange component is further connected to the first check valve 2; a gas outlet of the flash tank 9 is connected to a middle air supplementation port of the magnetic levitation centrifugal compressor 1; the flash tank 9 is further sequentially connected to a liquid storage tank 12 and the evaporator 13; and the evaporator 13 is connected to a fourth interface of the switching communication device 3.

Optionally, a second electric valve 15 is provided on a pipeline between the gas-liquid separator 4 and the evaporator 13 for reducing the unit load.

Optionally, the heat exchange component includes a conduction device 5, a heat exchanger 6, a filter 7 and a first electronic expansion valve 8 connected in sequence, wherein the conduction device 5 is controllably connected to the first check valve 2 and the heat exchanger 6, or the gas-liquid separator 4 and the heat exchanger 6; and the first electronic expansion valve 8 is connected to the flash tank 9. Optionally, the heat exchange component is a plurality of heat exchange components arranged in parallel.

According to the invention, the heat pump system further includes a control device, including:
a first unit for controlling turn-on and turn-off of the first electric valve 14; and
a second unit for controlling the switching communication device 3 to be turned on according to a running instruction. The first unit is configured to control the first electric valve 14 as defined in appended independent claim 1.

After the first unit controls the first electric valve 14 to be turned on, the magnetic levitation centrifugal compressor 1 executes a startup instruction or a shutdown instruction; and, optionally, after the startup instruction or the shutdown instruction is executed, the first unit controls the first electric valve 14 to be turned off.

Optionally, when the running instruction is a first mode running instruction, the second unit controls the first interface of the switching communication device 3 to be connected to the second interface of the switching communication device 3, and the third interface of the switching communication device 3 to be connected to the fourth interface of the switching communication device 3; and when the running instruction is a second mode running instruction, the second unit controls the first interface of the switching communication device 3 to be connected to the fourth interface of the switching communication device 3, and the second interface of the switching communication device 3 to be connected to the third interface of the switching communication device 3.

Optionally, the control device further includes a third unit, and when the running instruction is the second mode running instruction, the third unit controls a conduction device 5 to be connected to the first check valve 2 and a heat exchanger 6, or a gas-liquid separator 4 and the heat exchanger 6.

Optionally, when the heat exchanger 6 needs to be defrosted, the third unit controls the conduction device 5 to be connected to the first check valve 2 and the heat exchanger 6.

Optionally, the magnetic levitation centrifugal compressor may include more than one compressors. By adopting high pressure ratio two-stage magnetic levitation centrifugal compressors and optimizing the design of the system, the problem that the air-cooled magnetic levitation centrifugal water chiller units in the prior art can only be cooled and cannot be heated can be solved well; on the other hand, many problems that conventional air-cooled screw heat pump screw units and air-cooled scroll heat pump units have low performance coefficients, high noise, difficult heating and oil return, and the influence of lubricating oil on heat exchange performance can also be solved, and thus obvious advantages such as high efficiency, high reliability, low noise and good heating comfort are reflected.

According to the embodiment shown in Fig. 1, by using the switching communication device 3, the heating function of the magnetic levitation centrifugal compressor units is realized; at the same time, by setting the first electric valve 14 according to the present invention, which is turned on before the magnetic levitation centrifugal compressor 1 is on to adjust a differential pressure between a high-pressure side and a low-pressure side of the compressor and is turned on before the compressor is off to reduce the shutdown pressure ratio, the compressor can run smoothly.

In another embodiment, the control device further includes a fourth unit for logically controlling an opening degree of the second electric valve 15. Optionally, when an environment temperature is lower than a first threshold, the opening degree of the second electric valve 15 is controlled logically to reduce the pressure ratio of the units and maintain the operation of the units. Optionally, when the units are operating under high pressure ratio working conditions, before the magnetic levitation centrifugal compressor 1 is shut down, the fourth unit logically controls the second electric valve 15 to be turned on to reduce the pressure ratio of the units, thereby enabling the compressor to operate safely and stably.

Fig. 2 shows another embodiment of a heat pump system.

As required by the present invention, the heat pump system inter alia includes a magnetic levitation centrifugal compressor 1, and further includes a switching communication device 3 and a first electric valve 14.

An exhaust pipe of the magnetic levitation centrifugal compressor 1 is connected to a first interface of the switching communication device 3 through a first check valve 2, and a suction pipe of the magnetic levitation centrifugal compressor 1 is connected to a third interface of the switching communication device 3.

The first electric valve 14 is arranged in parallel with the magnetic levitation centrifugal compressor 1, as required by the invention which is defined by appended independent claim 1, inter alia for reducing a differential pressure between a high side and a low side when the magnetic levitation centrifugal compressor 1 is on and off.

Optionally, the switching communication device 3 includes an electric four-way valve. When the units are shut down, the electric four-way valve is used to switch between cooling and heating, so as to avoid compressor failure caused by severe changes of high and low pressures when switching a four-way reversing valve during the operation of the compressor.

Optionally, a second interface of the switching communication device 3 is connected to a gas-liquid separator 4, and the gas-liquid separator 4 is connected to an evaporator 13; the gas-liquid separator 4 is further sequentially connected to a heat exchange component and a flash tank 9, and the heat exchange component is further connected to the first check valve 2; a gas outlet of the flash tank 9 is connected to a middle air supplementation port of the magnetic levitation centrifugal compressor 1 through a first solenoid valve 16; the flash tank 9 is further sequentially connected to a liquid storage tank 12 and the evaporator 13; and the evaporator 13 is connected to a fourth interface of the switching communication device 3.

Optionally, a second electric valve 15 is provided on a pipeline between the gas-liquid separator 4 and the evaporator 13 for reducing the pressure ratio of the magnetic levitation centrifugal compressor 1.

Optionally, the heat exchange component includes a conduction device 5, a heat exchanger 6, a filter 7 and a first electronic expansion valve 8 connected in sequence, wherein the conduction device 5 is controllably connected to the first check valve 2 and the heat exchanger 6, or the gas-liquid separator 4 and the heat exchanger 6; and the first electronic expansion valve 8 is connected to the flash tank 9.

Optionally, the heat pump system further includes temperature sensors 18 and pressure sensors 17 respectively provided on the air suction pipe and the exhaust pipe of the magnetic levitation centrifugal compressor 1. The pressure sensor 17 is used to detect the pressure of the units, when the units are operating under high pressure ratio working conditions, the second electric valve 15 is controlled to be turned on logically before executing a shutdown instruction.

Optionally, the heat pump system further includes a temperature sensor 18 disposed between the heat exchanger 6 and the filter 7 for detecting an environment temperature to determine whether the heat exchanger 6 needs to perform a defrosting operation.

Optionally, the heat pump system further includes a drying filter 11 and a second electronic expansion valve 10 connected in series between the liquid storage tank 12 and the flash tank 9 for filtering impurities and throttling respectively.

According to the embodiment shown in Fig. 2, by using the switching communication device 3, the heating function of the magnetic levitation centrifugal compressor units is realized; at the same time and in agreement with the present invention, by setting the first electric valve 14, which is turned on before the magnetic levitation centrifugal compressor 1 is on to adjust a differential pressure between a high-pressure side and a low-pressure side of the compressor and is turned on before the compressor is off to reduce the shutdown pressure ratio, the compressor can run smoothly. On the one hand, the electric four-way valve is used to switch cooling and heating cycles of the units when the compressor is shut down, which has no impact on the compressor completely, thereby realizing cooling and heating dual-mode working conditions of the magnetic levitation centrifugal compressor 1 and having higher reliability; on the other hand, the magnetic levitation centrifugal compressor 1 is used, ultra-high pneumatic and mechanical efficiency are reflected through frequency conversion adjustment, therefore, the heat pump system is oil-free cycle, which solves the problems of the heat exchange efficiency and the frosting speed and the like caused by large viscosity of lubricating oil when a temperature of a fin heat exchanger 6 is relatively low during the heating.

In another embodiment, the control device further includes a fourth unit for logically controlling an opening degree of the second electric valve 15. Optionally, when an environment temperature is lower than a first threshold, the opening degree of the second electric valve 15 is logically controlled to reduce the pressure ratio of the units and maintain the operation of the units. Optionally, when the units are operating under high pressure ratio working conditions, before the magnetic levitation centrifugal compressor 1 is shut down, the fourth unit logically controls the second electric valve 15 to be turned on to reduce the pressure ratio of the units, thereby enabling the compressor to operate safely and stably.

In another embodiment, the conduction device 5 includes an electric three-way valve, wherein a first interface of the electric three-way valve is connected to the gas-liquid separator 4 through a pipeline, a second interface of the electric three-way valve is connected to the heat exchanger 6 through a pipeline, a third interface of the electric three-way valve is connected to the first check valve 2 through a pipeline, and thus a pipeline between the heat exchanger 6 and the first check valve 2 or a pipeline between the heat exchanger 6 and the gas-liquid separator 4 can be controllably conducted. Optionally, the conduction device 5 includes a first two-way solenoid valve and a second two-way solenoid valve, wherein the first two-way solenoid valve is connected in series on the pipeline between the gas-liquid separator 4 and the heat exchanger 6, the second two-way solenoid valve is connected in series on the pipeline between the heat exchanger 6 and the first check valve 2, and thus the heat exchanger 6 and the gas-liquid separator 4 or the heat exchanger 6 and the first check valve 2 are controllably conducted.

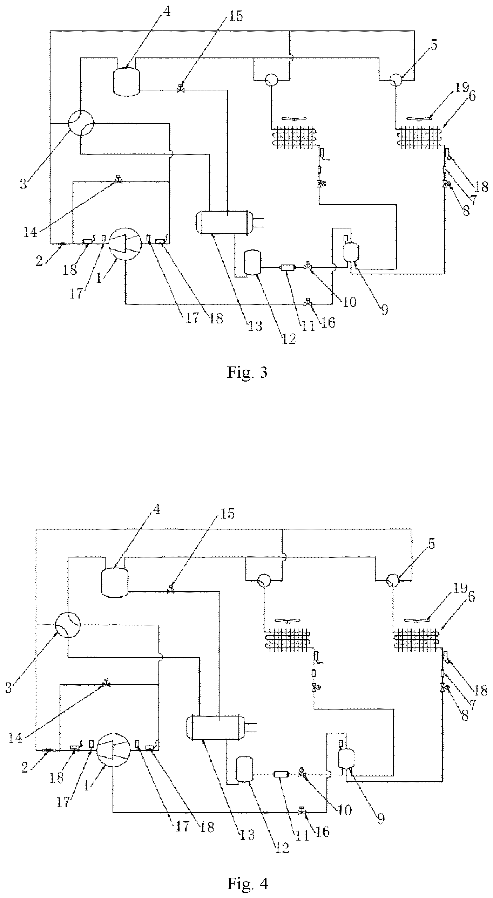

Fig. 3 shows another embodiment of a heat pump system.

In this embodiment, as required by the invention, the heat pump system includes a magnetic levitation centrifugal compressor 1, and further includes a switching communication device 3 and a first electric valve 14, wherein an exhaust pipe of the magnetic levitation centrifugal compressor 1 is connected to a first interface of the switching communication device 3 through a first check valve 2, a suction pipe of the magnetic levitation centrifugal compressor 1 is connected to a third interface of the switching communication device 3, and the first electric valve 14 is arranged in parallel with the magnetic levitation centrifugal compressor 1, as defined by appended independent claim 1, inter alia for reducing a differential pressure between a high side and a low side when the magnetic levitation centrifugal compressor 1 is on and off.

Referring to Fig. 3, when the running instruction is a first mode running instruction, and the heat pump system enters a cooling mode, the specific connection relation of the heat pump system is as follows.

A first unit controls the first electric valve 14 to be turned on; a second unit controls the first interface of the switching communication device 3 to be connected to a second interface of the switching communication device 3, and the third interface of the switching communication device 3 to be connected to a fourth interface of the switching communication device 3, so that the magnetic levitation centrifugal compressor 1 is on; and the first unit logically controls the first electric valve 14 to be turned off after the magnetic levitation centrifugal compressor 1 is on.

The heat pump system starts to cool, a low-temperature and low-pressure medium is discharged through the exhaust pipe of the magnetic levitation centrifugal compressor 1, and becomes a high-temperature and high-pressure superheated gas; the gaseous medium passes through the first check valve 2, enters through the first interface of the switching communication device 3, is discharged from the second interface of the switching communication device 3, and enters a heat exchange component after entering a gas-liquid separator 4 through a pipeline. Specifically, the gaseous medium in the heat exchange component enters a heat exchanger 6 through a conduction device 5, and transfers heat to air through heat exchange; at this time, the gaseous medium is condensed into a high-temperature and high-pressure liquid, and becomes a saturated medium after being throttled by a first electronic expansion valve 8, which is divided into a liquid state and a gaseous state after entering into a flash tank 9; the liquid medium is output from the flash tank 9 and throttled again by a second electronic expansion valve 10, enters an evaporator 13 through a drying filter 11 and a liquid storage tank 12, becomes a low-temperature superheated gaseous medium after evaporation and heat absorption, enters through a fourth interface of the switching communication device, is discharged from the third interface the switching communication device, and returns to the suction pipe of the magnetic levitation centrifugal compressor 1 through a pipeline, the system continuously circulates cold water to dissipate heat into the air; after being output from the flash tank 9, the gaseous medium passes through a first solenoid valve 16, enters a middle supplementation port of the magnetic levitation centrifugal compressor 1 through a pipeline, and is mixed with a refrigerant having completed a first-stage compression to perform a second-stage compression, so that a temperature of the refrigerant entering the second-stage compression is reduced, and meanwhile, a suction amount of the second-stage compression is increased, thereby increasing a cooling amount of the units.

When the heat pump system receives a shutdown instruction, the first unit controls the first electric valve 14 to be turned on, the magnetic levitation centrifugal compressor 1 executes the shutdown instruction, and the first unit controls the first electric valve 14 to be turned off logically after the magnetic levitation centrifugal compressor 1 is shut down.

According to the embodiment shown in Fig. 3, by setting the first electric valve 14, which is turned on before the magnetic levitation centrifugal compressor 1 is on to adjust a differential pressure between a high-pressure side and a low-pressure side of the compressor and is turned on before the compressor is off to reduce the shutdown pressure ratio, the compressor can run smoothly. On the other hand, the gaseous medium is directly introduced into the middle supplementation port of the magnetic levitation centrifugal compressor 1, mixed with the refrigerant having completed the first-stage compression, and then subjected to the second-stage compression, so that the temperature of the refrigerant entering the second-stage compression is reduced, and meanwhile, the suction amount of the second-stage compression is increased, thereby increasing the cooling amount of the units and improving the cooling capacity of the units.

In another embodiment, when pressure sensors 17 provided in front of and behind the magnetic levitation centrifugal compressor 1 detect that the units are operating under high pressure ratio working conditions, before the magnetic levitation centrifugal compressor 1 is shut down, a fourth unit, in addition to the steps according to the controller configuration forming part of the present invention, logically controls the second electric valve 15 to be turned on to reduce the pressure ratio of the units, so that the compressor can operate safely and stably; after the magnetic levitation centrifugal compressor 1 is shut down, the fourth unit controls the second electric valve 15 to be turned off logically.

Fig. 4 shows another embodiment of a heat pump system.

In this embodiment, the heat pump system includes a magnetic levitation centrifugal compressor 1, and further includes a switching communication device 3 and a first electric valve 14, wherein an exhaust pipe of the magnetic levitation centrifugal compressor 1 is connected to a first interface of the switching communication device 3 through a first check valve 2, an air suction pipe of the magnetic levitation centrifugal compressor 1 is connected to a third interface of the switching communication device 3, and the first electric valve 14 is arranged in parallel with the magnetic levitation centrifugal compressor 1, as defined by appended independent claim 1, inter alia for reducing a differential pressure between a high side and a low side when the magnetic levitation centrifugal compressor 1 is on and off.

Referring to Fig. 4, when the running instruction is a second mode running instruction and the heat pump system enters a heating mode, the specific connection relation of the heat pump system is as follows.

A first unit controls the first electric valve 14 to be turned on; a second unit controls the first interface of the switching communication device 3 to be connected to a fourth interface of the switching communication device 3, and a second interface of the switching communication device 3 to be connected to the third interface of the switching communication device 3, so that the magnetic levitation centrifugal compressor 1 is on; and the first unit logically controls the first electric valve 14 to be turned off after the magnetic levitation centrifugal compressor 1 is on.

The heat pump system starts to heat, a low-temperature and low-pressure medium is discharged through the exhaust pipe of the magnetic levitation centrifugal compressor 1, and becomes a high-temperature and high-pressure superheated gas; the gaseous medium passes through the first check valve 2, enters through the first interface of the switching communication device 3, is discharged from the fourth interface of the switching communication device 3, and enters an evaporator 13 through a pipeline. The gaseous medium is condensed into a high-temperature and high-pressure liquid through heat exchange in the so-called evaporator 13, which acts as a condenser, passes through a liquid storage tank 12 and a drying filter 11 in sequence, and becomes a saturated medium after being throttled by a second electronic expansion valve 10, which is divided into a liquid state and a gaseous state after entering into a flash tank 9; the liquid medium enters a heat exchange component after being output from the flash tank 9, that is, after being throttled again by a first electronic expansion valve 8, the liquid medium enters a heat exchanger 6 through filter 7, becomes a low-temperature superheated gas after evaporation and heat absorption, enters gas-liquid separator 4 through a conduction device 5, enters from the second interface of the switching communication device 3 and is discharged from the third interface of the switching communication device 3, and returns to the suction pipe of the magnetic levitation centrifugal compressor 1 through a pipeline, the system continuously absorbs heat in the air to circulate to make hot water; after being output from the flash tank 9, the gaseous medium passes through a first solenoid valve 16, enters a middle supplementation port of the magnetic levitation centrifugal compressor 1 through a pipeline, and is mixed with a refrigerant having completed a first-stage compression to perform a second-stage compression, so that a temperature of the refrigerant entering the second-stage compression is reduced, and meanwhile, a suction amount of the second-stage compression is increased, thereby increasing a heating amount of the units.

When the heat pump system receives a shutdown instruction, the first unit controls the first electric valve 14 to be turned on, the magnetic levitation centrifugal compressor 1 executes the shutdown instruction, and the first unit controls the first electric valve 14 to be turned off logically after the magnetic levitation centrifugal compressor 1 is shut down.

According to the embodiment shown in Fig. 4, by using the switching communication device 3, the heating function of the magnetic levitation centrifugal compressor units is realized; at the same time, by setting the first electric valve 14, which, as defined by the present invention, is turned on before the magnetic levitation centrifugal compressor 1 is on to adjust a differential pressure between a high-pressure side and a low-pressure side of the compressor and is turned on before the compressor is off to reduce the shutdown pressure ratio, the compressor can run smoothly. On the other hand, the gaseous medium is directly introduced into the middle supplementation port of the magnetic levitation centrifugal compressor 1, mixed with the refrigerant having completed the first-stage compression, and then subjected to the second-stage compression, so that the temperature of the refrigerant entering the second-stage compression is reduced, and meanwhile, the suction amount of the second-stage compression is increased, thereby increasing the heating amount of the units and improving the heating capacity of the units.

In another embodiment, when pressure sensors 17 provided in front of and behind the magnetic levitation centrifugal compressor 1 detect that the units are operating under high pressure ratio working conditions, before the magnetic levitation centrifugal compressor 1 is shut down, a fourth unit, in addition to the steps according to the controller configuration forming part of the present invention, logically controls the second electric valve 15 to be turned on to reduce the pressure ratio of the units, so that the compressor can operate safely and stably; after the magnetic levitation centrifugal compressor 1 is shut down, the fourth unit controls the second electric valve 15 to be turned off logically.

In another embodiment, when temperature sensors 18 provided in front of and behind the magnetic levitation centrifugal compressor 1 detect that the units are operating in the heating mode under low temperature conditions, the fourth unit logically controls the second electric valve to be turned on to reduce the pressure ratio of the units and maintain the operation of the units.

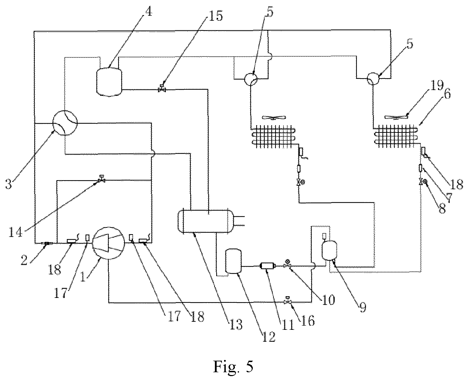

Fig. 5 shows another embodiment of a heat pump system.

In this embodiment, the heat pump system includes a magnetic levitation centrifugal compressor 1, and further includes a switching communication device 3 and a first electric valve 14, wherein an exhaust pipe of the magnetic levitation centrifugal compressor 1 is connected to a first interface of the switching communication device 3 through a first check valve 2, a suction pipe of the magnetic levitation centrifugal compressor 1 is connected to a third interface of the switching communication device 3, and the first electric valve 14 is arranged in parallel with the magnetic levitation centrifugal compressor 1, as defined by the present invention, inter alia for reducing a differential pressure between a high side and a low side when the magnetic levitation centrifugal compressor 1 is on and off.

Optionally, when the running instruction is a second mode running instruction and the heat pump system enters a heating mode, temperature sensors 18 provided on pipelines detect an environment temperature. When the temperature sensor 18 disposed between a heat exchanger 6 and a filter 7 detects that the environment temperature is relatively low, a control device logically determines to defrost the heat exchanger 6 that needs to be defrosted.

Referring to Fig. 5, when the heat exchanger 6 is defrosted, the specific connection relation of the heat pump system is: a fan 19 of the heat exchanger 6 is turned off, a third unit controls a conduction device 5 to switch to connect the first check valve 2 and the heat exchanger 6. At this time, since one end of the conduction device 5 is connected to a high-pressure pipeline provided before the first check valve 2 and the switching communication device 3 through pipelines, and the other end of the conduction device 5 is connected to the heat exchanger 6, the other end of the heat exchanger 6 is connected to a flash tank 9 through a pipeline; at this time, the pressure in the flash tank 9 is lower than that in the high-pressure pipeline provided before the first check valve 2 and the switching communication device 3, a high-temperature and high-pressure medium discharged from the exhaust pipe of the magnetic levitation centrifugal compressor 1 enters the heat exchanger 6 for condensation and heat exchange, the temperature of the heat exchanger 6 rises and the frost melts, thereby achieving the purpose of defrosting; the condensed liquid medium is returned to the flash tank 9 through the filter 7 and a first electronic expansion valve 8 to continue participating in the cycle.

In the defrosting process, the heat pump system still maintains the heating mode, performs a heating cycle, and does not absorb heat from an evaporator 13 for defrosting.

According to the embodiment shown in Fig. 5, when a certain heat exchanger 6 in the system meets defrosting conditions, the third unit controls conduction device 5 to switch to the heat exchanger 6 that needs to be defrosted, that is, the system runs in the cooling mode and the fan 19 for defrosting stops. Since other heat exchangers 6 still maintain a heating cycle, the pressure change of the system is relatively small, the stable operation of the magnetic levitation centrifugal compressor 1 is ensured and the defrosting problem of the magnetic levitation centrifugal compressor 1 is solved; meanwhile, since the water temperature change in the defrosting process is relatively small, user comfort is improved. On the other hand, when the heat exchanger 6 is defrosted, the refrigerant is directly connected to the flash tank 9 through the first electronic expansion valve 8 of a liquid return pipeline, therefore, the flow rate of the refrigerant is accurately controlled, the liquid discharge speed is improved, the liquid storage amount of the heat exchanger 6 in the defrosting process is reduced, the temperature rise speed of the fin heat exchanger 6 is accelerated to quickly melt the ice layer on fins, and the defrosting time is shortened. Compared with other hot gas bypass defrosting solutions, the defrosting speed of the embodiment of the present disclosure is faster.

In another embodiment, when a plurality of heat exchangers 6 in a plurality of heat exchange components need to be defrosted, only the heat exchangers 6 in one group of heat exchange components are defrosted at a time, and other heat exchangers 6 satisfying the conditions are defrosted after the defrosting of the heat exchangers 6 is completed. Optionally, the defrosting is carried out one by one among a plurality of heat exchange components to be defrosted according to the order from first to last when the defrosting conditions are met, and the third unit controls the conduction device 5 in the heat exchange component in which the third unit is located one by one to carry out pipeline communication. Optionally, when a plurality of heat exchangers 6 in a plurality of heat exchange components need to be defrosted, the defrosting is performed one by one according to the temperature value detected by the temperature sensor 18 in each heat exchange component in the order from low to high, and the third unit controls the conduction device 5 in the heat exchange component in which the third unit is located one by one to carry out pipeline communication. Since only one fin heat exchanger 6 is switched at a time, the pressure change of the system is relatively small, the stable operation of the magnetic levitation centrifugal compressor 1 is ensured and the defrosting problem of the magnetic levitation centrifugal compressor 1 is solved.

In another embodiment, when pressure sensors 17 provided in front of and behind the magnetic levitation centrifugal compressor 1 detect that the units are operating under high pressure ratio working conditions, before the magnetic levitation centrifugal compressor 1 is shut down, a fourth unit, in addition to the steps according to the controller configuration forming part of the present invention, logically controls the second electric valve 15 to be turned on to reduce the pressure ratio of the units, so that the compressor can operate safely and stably; after the magnetic levitation centrifugal compressor 1 is shut down, the fourth unit controls the second electric valve 15 to be turned off logically.

In another embodiment, when temperature sensors 18 provided in front of and behind the magnetic levitation centrifugal compressor 1 detect that the units are operating in the heating mode under low temperature conditions, the fourth unit, in addition to the steps according to the controller configuration forming part of the present invention, logically controls the second electric valve to be turned on to reduce the pressure ratio of the units and maintain the operation of the units.

In another embodiment, the conduction device 5 includes an electric three-way valve, wherein a first interface of the electric three-way valve is connected to the gas-liquid separator 4 through a pipeline, a second interface of the electric three-way valve is connected to the heat exchanger 6 through a pipeline, a third interface of the electric three-way valve is connected to the first check valve 2 through a pipeline, and thus a pipeline between the heat exchanger 6 and the first check valve 2 or a pipeline between the heat exchanger 6 and the gas-liquid separator 4 can be controllably conducted. Optionally, the conduction device 5 includes a first two-way solenoid valve and a second two-way solenoid valve, wherein the first two-way solenoid valve is connected in series on the pipeline between the gas-liquid separator 4 and the heat exchanger 6, the second two-way solenoid valve is connected in series on the pipeline between the heat exchanger 6 and the first check valve 2, and thus the heat exchanger 6 and the gas-liquid separator 4 or the heat exchanger 6 and the first check valve 2 are controllably conducted.

The invention is defined by the appended claims.

## Claims

1. A heat pump system comprising a magnetic levitation centrifugal compressor (1), further comprising a switching communication device (3) and a first electric valve (14); wherein
an exhaust pipe of the magnetic levitation centrifugal compressor (1) is connected to a first interface of the switching communication device (3) through a first check valve (2), and a suction pipe of the magnetic levitation centrifugal compressor (1) is connected to a third interface of the switching communication device (3); and
the first electric valve (14) is arranged in parallel with the magnetic levitation centrifugal compressor (1), wherein the heat pump system further comprises a control device, comprising:
a first unit for controlling turn-on and turn-off of the first electric valve (14); and
a second unit for controlling the switching communication device (3) to be turned on according to a running instruction.
wherein the first unit of the control device is configured such that
the first electric valve is turned on before the magnetic levitation centrifugal compressor (1) is on to adjust a differential pressure between a high-pressure side and a low-pressure side of the compressor and is turned on before the compressor is off to reduce the shutdown pressure ratio.

2. The heat pump system according to claim 1, wherein a second interface of the switching communication device (3) is connected to a gas-liquid separator (4), and the gas-liquid separator (4) is connected through a second electric valve to a so-called evaporator (13); the gas-liquid separator (4) is further connected through a heat exchange component to a flash tank (9), and the heat exchange component is further connected to the first check valve (2); a gas outlet of the flash tank (9) is connected to a middle air supplementation port of the magnetic levitation centrifugal compressor (1); the flash tank (9) is further connected through a liquid storage tank (12) to the so-called evaporator (13):
and the so-called evaporator (13) is further connected to a fourth interface of the switching communication device (3).

3. The heat pump system according to claim 2, wherein the heat exchange component comprises a conduction device (5), a heat exchanger (6), a filter (7) and a first electronic expansion valve (8) connected in sequence, wherein the conduction device (5) is controllably connected to the first check valve (2) and the heat exchanger (6), or the gas-liquid separator (4) and the heat exchanger (6); and the first electronic expansion valve (8) is connected to the flash tank (9).

4. The heat pump system according to claim 2, wherein the heat exchange component is a plurality of heat exchange components arranged in parallel.

5. The heat pump system according to claim 1, wherein the system is configured such that after the first unit controls the first electric valve (14) to be turned on, the magnetic levitation centrifugal compressor (1) executes a startup instruction or a shutdown instruction; and after the startup instruction or the shutdown instruction is executed, the first unit controls the first electric valve (14) to be turned off.

6. The heat pump system according to claim 1, wherein the system is configured such that, when the running instruction is a first mode running instruction, the second unit controls the first interface of the switching communication device (3) to be connected to the second interface of the switching communication device (3), and the third interface of the switching communication device (3) to be connected to the fourth interface of the switching communication device (3); and
when the running instruction is a second mode running instruction, the second unit controls the first interface of the switching communication device (3) to be connected to the fourth interface of the switching communication device (3), and the second interface of the switching communication device (3) to be connected to the third interface of the switching communication device (3).

7. The heat pump system according to claim 6, wherein the control device further comprises a third unit, which third unit is configured such that, when the running instruction is the second mode running instruction, the third unit controls a conduction device (5) to be connected to the first check valve (2) and a heat exchanger (6), or a gas-liquid separator (4) and the heat exchanger (6).

8. The heat pump system according to claim 7, wherein the system is configured such that, when the heat exchanger (6) needs to be defrosted, the third unit controls the conduction device (5) to be connected to the first check valve (2) and the heat exchanger (6).

## Patentansprüche

1. Wärmepumpensystem mit Magnetschwebetechnik-Zentrifugalkompressor (1), ferner mit einer Kommunikationsschaltvorrichtung (3) und einem ersten elektrischen Ventil (14); wobei
ein Abluftrohr des Magnetschwebetechnik-Zentrifugalkompressors (1) mit einer erste Schnittstelle der Kommunikationsschaltvorrichtung (3) über ein erstes Rückschlagventil (2) verbunden ist, und ein Saugrohr des Magnetschwebetechnik-Zentrifugalkompressors (1) mit einer dritten Schnittstelle der Kommunikationsschaltvorrichtung /3) verbunden ist; und
das erste elektrische Ventil (14) parallel zu dem Magnetschwebetechnik-Zentrifugalkompressor (1) angeordnet ist, wobei das Wärmepumpensystem ferner eine Steuervorrichtung aufweist, mit:
einer ersten Einheit zum Steuern des Einschaltens und des Ausschaltens des ersten elektrischen Ventils (14); und
einer zweiten Einheit zum Steuern des Einschaltens der Kommunikationsschaltvorrichtung (3) gemäß einem Betriebsbefehl,
wobei die erste Einheit der Steuervorrichtung derart ausgebildet ist, dass das erste elektrische Ventil eingeschaltet wird, bevor der Magnetschwebetechnik-Zentrifugalkompressor (1) eingeschaltet ist, um einen Differenzdruck zwischen einer Hochdruckseite und einer Niederdruckseite des Kompressors einzustellen, und eingeschaltet wird, bevor der Kompressor ausgeschaltet wird, um das Abschaltdruckverhältnis zu verringern.

2. Wärmepumpensystem nach Anspruch 1, bei welchem eine zweite Schnittstelle der Kommunikationsschaltvorrichtung (3) mit einem Gas-Flüssigkeit-Separator (4) verbunden ist, und der Gas-Flüssigkeit-Separator (4) über ein zweites elektrisches Ventil mit einem sogenannten Evaporator (13) verbunden ist; der Gas-Flüssigkeit-Separator (4) ferner über ein Wärmetauschbauteil mit einem Entspannungstank (9) verbunden ist, und das Wärmetauschbauteil ferner mit dem ersten Rückschlagventil (2) verbunden ist; ein Gasauslass des Entspannungstanks (9) mit einem mittleren Supplementierungsport des Magnetschwebetechnik-Zentrifugalkompressors (1) verbunden ist; der Entspannungstank (9) ferner über einen Flüssigkeitsspeichertank (12) mit dem sogenannten Evaporator (13) verbunden ist; und der sogenannte Evaporator (13) ferner mit einer vierten Schnittstelle der Kommunikationsschaltvorrichtung (3) verbunden ist.

3. Wärmepumpensystem nach Anspruch 2, bei welchem das Wärmetauschbauteil eine Leitvorrichtung (5), einen Wärmetauscher (6), einen Filter (7) und ein erstes elektronisches Expansionsventil (8) aufweist, die aufeinanderfolgend verbunden sind, wobei die Leitvorrichtung (5) steuerbar mit dem ersten Rückschlagventil (2) und dem Wärmetauscher (6) oder mit dem Gas-Flüssigkeit-Separator (4) und dem Wärmetauscher (6) verbunden ist; und das erste elektronische Expansionsventil (8) mit dem Entspannungstank (9) verbunden ist.

4. Wärmepumpensystem nach Anspruch 2, bei welchem das Wärmetauschbauteil mehrere parallel angeordnete Wärmetauschbauteile aufweist.

5. Wärmepumpensystem nach Anspruch 1, bei welchem das System derart ausgebildet ist, dass nachdem die erste Einheit das Einschalten des ersten elektrischen Ventils (14) gesteuert hat, der Magnetschwebetechnik-Zentrifugalkompressor (1) einen Startbefehl oder einen Abschaltbefehl ausführt; und die erste Einheit nach dem Ausführen des Startbefehls oder des Abschaltbefehls das Abschalten des ersten elektrischen Ventils (14) steuert.

6. Wärmepumpensystem nach Anspruch 1, bei welchem das System derart ausgebildet ist, dass, wenn der Betriebsbefehl ein Betriebsbefehl für einen ersten Modus ist, die zweite Einheit das Verbinden der ersten Schnittstelle der Kommunikationsschaltvorrichtung (3) mit der zweiten Schnittstelle der Kommunikationsschaltvorrichtung (3) steuert, und das Verbinden der dritten Schnittstelle der Kommunikationsschaltvorrichtung (3) mit der vierten Schnittstelle der Kommunikationsschaltvorrichtung (3) steuert; und
wenn der Betriebsbefehl ein Betriebsbefehl für einen zweiten Modus ist, die zweite Einheit das Verbinden der ersten Schnittstelle der Kommunikationsschaltvorrichtung (3) mit der vierten Schnittstelle der Kommunikationsschaltvorrichtung (3) steuert, und das Verbinden der zweiten Schnittstelle der Kommunikationsschaltvorrichtung (3) mit der dritten Schnittstelle der Kommunikationsschaltvorrichtung (3) steuert.

7. Wärmepumpensystem nach Anspruch 6, bei welchem die Steuervorrichtung ferner eine dritte Einheit aufweist, wobei die dritte Einheit dazu ausgebildet ist, wenn der Betriebsbefehl der Betriebsbefehl für den zweiten Modus ist, das Verbinden einer Leitvorrichtung (5) mit dem ersten Rückschlagventil (2) und einem Wärmetauscher (6) oder einem Gas-Flüssigkeit-Separator (4) und dem Wärmetauscher (6) zu steuern.

8. Wärmepumpensystem nach Anspruch 7, bei welchem das System derart ausgebildet ist, dass, wenn der Wärmetauscher (6) abgetaut werden muss, die dritte Einheit das Verbinden der Leitvorrichtung (5) mit dem ersten Rückschlagventil (2) und dem Wärmetauscher (6) steuert.

## Revendications

1. Système de pompe à chaleur comprenant un compresseur centrifuge à lévitation magnétique (1), comprenant en outre un dispositif de communication à commutation (3) et une première électrovanne (14) ; dans lequel
un tuyau d'échappement du compresseur centrifuge à lévitation magnétique (1) est relié à une première interface du dispositif de communication à commutation (3) par un premier clapet anti-retour (2), et un tuyau d'aspiration du compresseur centrifuge à lévitation magnétique (1) est relié à une troisième interface du dispositif de communication à commutation (3) ; et
la première électrovanne (14) est placée en parallèle avec le compresseur centrifuge à lévitation magnétique (1), dans lequel le système de pompe à chaleur comprend en outre un dispositif de commande, comprenant :
une première unité permettant de commander la mise en marche et l'arrêt de la première électrovanne (14) ; et
une deuxième unité permettant de commander la mise en marche du dispositif de communication à commutation (3) selon une instruction de fonctionnement,
dans lequel la première unité du dispositif de commande est configurée de telle sorte que la première électrovanne est mise en marche avant que le compresseur centrifuge à lévitation magnétique (1) ne soit en marche pour régler une pression différentielle entre un côté haute pression et un côté basse pression du compresseur et est mise en marche avant que le compresseur ne soit arrêté pour réduire le rapport de pression d'arrêt.

2. Système de pompe à chaleur selon la revendication 1, dans lequel une deuxième interface du dispositif de communication à commutation (3) est reliée à un séparateur gaz-liquide (4), et le séparateur gaz-liquide (4) est relié par une seconde électrovanne à un dit évaporateur (13) ; le séparateur gaz-liquide (4) est en outre relié par un composant d'échange de chaleur à un réservoir de détente (9), et le composant d'échange de chaleur est en outre relié au premier clapet anti-retour (2) ; une sortie de gaz du réservoir de détente (9) est reliée à un orifice de supplémentation intermédiaire du compresseur centrifuge à lévitation magnétique (1) ; le réservoir de détente (9) est en outre relié par un réservoir de stockage de liquide (12) audit évaporateur (13) ; et ledit évaporateur (13) est en outre relié à une quatrième interface du dispositif de communication à commutation (3).

3. Système de pompe à chaleur selon la revendication 2, dans lequel le composant d'échange de chaleur comprend un dispositif de conduction (5), un échangeur de chaleur (6), un filtre (7) et un premier détendeur électronique (8) reliés en séquence, dans lequel le dispositif de conduction (5) est relié de manière commandable au premier clapet anti-retour (2) et à l'échangeur de chaleur (6), ou au séparateur gaz-liquide (4) et à l'échangeur de chaleur (6) ; et le premier détendeur électronique (8) est relié au réservoir de détente (9).

4. Système de pompe à chaleur selon la revendication 2, dans lequel le composant d'échange de chaleur est une pluralité de composants d'échange de chaleur placés en parallèle.

5. Système de pompe à chaleur selon la revendication 1, dans lequel le système est configuré de telle sorte qu'après que la première unité commande la mise en marche de la première électrovanne (14), le compresseur centrifuge à lévitation magnétique (1) exécute une instruction de démarrage ou une instruction d'arrêt ; et après l'exécution de l'instruction de démarrage ou de l'instruction d'arrêt, la première unité commande l'arrêt de la première électrovanne (14).

6. Système de pompe à chaleur selon la revendication 1, dans lequel le système est configuré de telle sorte que, lorsque l'instruction de fonctionnement est une instruction de fonctionnement en premier mode, la deuxième unité commande la liaison de la première interface du dispositif de communication à commutation (3) à la deuxième interface du dispositif de communication à commutation (3), et la liaison de la troisième interface du dispositif de communication à commutation (3) à la quatrième interface du dispositif de communication à commutation (3) ; et
lorsque l'instruction de fonctionnement est une instruction de fonctionnement en second mode, la deuxième unité commande la liaison de la première interface du dispositif de communication à commutation (3) à la quatrième interface du dispositif de communication à commutation (3), et la liaison de la deuxième interface du dispositif de communication à commutation dispositif (3) à la troisième interface du dispositif de communication à commutation (3).

7. Système de pompe à chaleur selon la revendication 6, dans lequel le dispositif de commande comprend en outre une troisième unité, laquelle troisième unité est configurée de telle sorte que, lorsque l'instruction de fonctionnement est l'instruction de fonctionnement en second mode, la troisième unité commande la liaison d'un dispositif de conduction (5) au premier clapet anti-retour (2) et à un échangeur de chaleur (6), ou à un séparateur gaz-liquide (4) et à l'échangeur de chaleur (6).

8. Système de pompe à chaleur selon la revendication 7, dans lequel le système est configuré de telle sorte que, lorsque l'échangeur de chaleur (6) doit être dégivré, la troisième unité commande la liaison du dispositif de conduction (5) au premier clapet anti-retour (2) et à l'échangeur de chaleur (6).
